# EUROPÄISCHE PATENTSCHRIFT

(11) **EP 3 816 077 B1**
(45) Veröffentlichungstag und Bekanntmachung des Hinweises auf die Patenterteilung: **18.09.2024**
(21) Anmeldenummer: 19206198.4
(22) Anmeldetag: 30.10.2019
(51) Int. Cl.: B65G 47/86, B65G 47/90

(54) **GREIFARM, GREIFVORRICHTUNG SOWIE TRANSPORTVORRICHTUNG ZUM GREIFEN, HALTEN UND FÜHREN VON INSBESONDERE FLASCHENARTIGEN BEHÄLTERN**
GRIPPING ARM, GRIPPER DEVICE AND TRANSPORT DEVICE FOR GRIPPING, HOLDING AND GUIDING IN PARTICULAR BOTTLE-TYPE CONTAINERS
BRAS DE PRÉHENSION, DISPOSITIF DE PRÉHENSION AINSI QUE DISPOSITIF DE TRANSPORT DESTINÉ À LA PRÉHENSION, LE MAINTIEN ET LE GUIDAGE, EN PARTICULIER DES RÉCIPIENTS DE TYPE BOUTEILLE

(43) Veröffentlichungstag der Anmeldung: 05.05.2021
(73) Patentinhaber: Tyrolon-Schulnig GmbH, 6395 Hochfilzen (AT)
(72) Erfinder: Schulnig, Elmar, 6392 St. Jakob i.H. (AT)
(74) Vertreter: Meissner Bolte Partnerschaft mbB

(56) Entgegenhaltungen:
- EP-A1- 3 165 482
- EP-B1- 2 769 942
- CN-U- 203 545 126
- JP-B2- 4 239 149

## Beschreibung

Die Erfindung betrifft einen Greifarm, eine Greifvorrichtung sowie eine Transportvorrichtung zum Greifen, Halten und Führen von flaschenartigen Behältern.

Greifvorrichtungen mit Greifarmen zum Greifen, Halten und/oder Führen von insbesondere im Wesentlichen rund geformten Behältern sind bereits aus dem Stand der Technik bekannt und werden bei der fließbandtechnischen Bearbeitung derartiger Behälter verwendet.

Unter dem Begriff Behälter sind im Zusammenhang mit der vorliegenden Erfindung, insbesondere, aber nicht ausschließlich Behälter mit einem im Wesentlichen kreisförmigen Querschnitt zu verstehen, zum Beispiel Fläschchen oder Dosen oder Gläschen, die jeweils den Gepflogenheiten entsprechend aus Glas, Metall oder Kunststoff bestehen können. Unter dem Begriff "im Wesentlichen rund geformt" sind im Zusammenhang mit der vorliegenden Erfindung nicht ausschließlich im geometrischen Sinne, rund geformte Behälter zu verstehen, sondern beispielsweise auch ovale, regelmäßig vieleckige usw., welche dann insbesondere einen im Wesentlichen kreisförmigen, beispielsweise aber auch ovalen oder vieleckigen Querschnitt aufweisen.

Beim Reinigen, Befüllen oder Verschließen, werden die Behälter üblicherweise bei einer Eingangsstation mittels einer Greifvorrichtung mit mindestens einem Greifarmpaar gegriffen und zu einer nächsten Station im Bearbeitungsprozess transportiert. Eine solche Greifvorrichtung für ein Behältertransportsystem besitzt typischerweise wenigstens zwei Greifarme und kann zwischen einer Greifstellung und einer Öffnungsstellung wechseln. Um einen Behälter zu transportieren, greifen die Greifarme normalerweise unterhalb des Halskragens oder - bei Flaschen oder anderen länglichen Behältern - um den Bauch des Behälters.

Beispielsweise fungiert ein Steuernocken hierbei als Öffnungsmittel. Hierzu wirkt der Steuernocken, der üblicherweise kein Teil des Greifarms ist, mit zumindest einer Betätigungsrolle des Greifarms zusammen. Wenn hierbei die Greifvorrichtung durch den Steuernocken geöffnet wird, wird eine Kraft auf die zumindest eine Betätigungsrolle gegen eine Greifarminnenseite des Greifarms aufgewendet. Der Steuernocken drückt also mit anderen Worten das Greifarmpaar auseinander und öffnet somit die Greifvorrichtung.

Insbesondere, wenn der Behälter im Bauch gefasst werden soll, muss die Greifvorrichtung geeignet sein, den Behälter in einer bestimmten, insbesondere senkrechten Lage stabil festzuhalten. Dies erfordert ein passgenaues Greifen und Halten der Behälter, was bereits mit einem zuverlässigen Öffnen der Greifvorrichtung beginnt.

Aus der EP 3 165 482 A1 ist ein Greifer für eine Gefäßhandhabungsvorrichtung zu entnehmen, der einen Greifarmträger und eine oder mehrere(n) Greifzange(n) mit jeweils zwei Greifarmen aufweist. EP 3 165 482 A1 offenbart den Oberbegriff des Anspruchs 1.

Die zumindest eine Betätigungsrolle unterliegt jedoch aufgrund der Zusammenwirkung mit dem Steuernocken einer mechanischen Abnutzung, die sich nachteilig auf ein zuverlässiges Öffnen der Greifvorrichtung auswirkt. Die zumindest eine Betätigungsrolle muss somit je nach Auslastung der Greifvorrichtung in regelmäßigen Abständen ausgetauscht werden, was einen Stillstand der Greifvorrichtung oder gar der gesamten Anlage zur Folge hat. Dies ist meistens mit hohen Kosten und einem hohen Aufwand verbunden.

Ausgehend hiervon liegt der Erfindung daher die Aufgabe zugrunde, einen Greifarm, eine Greifvorrichtung sowie eine Transportvorrichtung anzugeben, bei der ein Wartungsintervall und insbesondere ein Austausch wartungsintensiver Bauteile zeitlich verkürzt werden kann.

Mit Blick auf den Greifarm wird die Aufgabe konkret gelöst durch einen Greifarm für eine Greifvorrichtung zum Greifen, Führen und Halten von flaschenartigen Behältern gemäß Anspruch 1. Der Greifarm weist hierbei einen Grundkörper und einen Greifabschnitt auf, der an dem Grundkörper angeordnet ist. Der Grundkörper dient insbesondere einem Greifen, Halten und Führen der flaschenartigen Behälter. Weiterhin weist der Greifarm zumindest eine ebenfalls an dem Grundkörper angeordnete und rotierbar gelagerte Betätigungsrolle auf. Die zumindest eine Betätigungsrolle dient hierbei einem Zusammenwirken mit einem Steuernocken der Greifvorrichtung. Im Betrieb des Greifarms bzw. der Greifvorrichtung dient in dieser Ausgestaltung der Steuernocken als Öffnungsmittel und drückt, zum Verstellen des Greifarms von einer Greifstellung in eine Öffnungsstellung gegen die Betätigungsrolle des Greifarms.

Erfindungsgemäß ist die zumindest eine Betätigungsrolle austauschbar an dem Grundkörper angeordnet. Unter austauschbar wird im Zusammenhang mit der vorliegenden Erfindung verstanden, dass die Betätigungsrolle vorzugsweise ohne Spezialwerkzeug und insbesondere werkzeuglos, also mit anderen Worten "von Hand" austauschbar ist. Unter werkzeuglos austauschbar wird hierbei entgegen der allgemeinen Definition ergänzend auch verstanden, dass zum Austausch der zumindest einen Betätigungsrolle lediglich einfaches Werkzeug, wie z.B. ein Schraubendreher und/oder eine Zange herangezogen werden muss.

Weiterhin wird somit unter austauschbar eine reversible Anordnung der zumindest einen Betätigungsrolle verstanden, sodass der Austausch der zumindest einen Betätigungsrolle ohne eine (Teil-)Beschädigung des Greifarms und/oder der zumindest einen Betätigungsrolle erfolgen kann.

Es ist somit ein einfacher und zeitsparender Austausch der zumindest einen Betätigungsrolle erreicht, der gleichzeitig die Stillstandszeit des Greifarms bzw. der Greifvorrichtung reduziert.

Der Grundkörper weist eine stiftartige Aufnahme für die zumindest eine austauschbare Betätigungsrolle auf. Hierdurch ist eine einfache und sichere Anordnung und Führung der Betätigungsrolle sichergestellt.

Bei mehreren Betätigungsrollen sind bevorzugt mehrere stiftartige Aufnahmen vorgesehen. Alternativ oder ergänzend, ist auch ermöglicht, bei mehreren Betätigungsrollen, zwei oder mehr Betätigungsrollen auf einer stiftartigen Aufnahme anzuordnen, insbesondere aufzustecken.

Bevorzugt und zweckdienliche ist hierbei die zumindest eine Betätigungsrolle auf die stiftartige Aufnahme austauschbar aufgesteckt. Dies trägt einer einfachen und schnellen Montage bzw. einem einfachen und schnellen Austausch der zumindest einen Betätigungsrolle Rechnung.

Um eine einfache Zugänglichkeit zu der zumindest einen Betätigungsrolle, insbesondere für einen Austausch zu gewährleisten, ist die zumindest eine Betätigungsrolle an einer Oberseite des Grundkörpers angeordnet. Die zumindest eine Betätigungsrolle wird hierbei bei einem Austausch einfach von oben gegriffen und nach oben hin von der stiftartigen Aufnahme abgezogen. Eine neue Betätigungsrolle wird anschließend in umgekehrter Reihenfolge von oben auf die stiftartige Aufnahme aufgesteckt.

Um die Zugänglichkeit und Austauschbarkeit der zumindest einen Betätigungsrolle weiter zu optimieren, ist die zumindest eine Betätigungsrolle freiliegend an dem Grundkörper angeordnet. Unter freiliegend wird im Zusammenhang mit der vorliegenden Erfindung verstanden, dass die zumindest eine Betätigungsrolle nicht von weiteren Bauteilen des Greifarms oder der Greifvorrichtung ab- oder verdeckt ist. Mit anderen Worten ist die zumindest eine Betätigungsrolle im am Grundkörper angeordneten Zustand beispielsweise von zumindest drei Seiten zugänglich.

Gemäß einer bevorzugten Ausgestaltungsform weist der Grundkörper eine insbesondere nutartige Ausnehmung auf. In der Ausnehmung ist gemäß dieser Ausgestaltungsform die zumindest eine Betätigungsrolle austauschbar angeordnet. Die zumindest eine Betätigungsrolle ist somit im angeordneten Zustand an zwei Seiten von der Ausnehmung verdeckt. Um die Rotierbarkeit der zumindest einen Betätigungsrolle sicherzustellen und in dieser Ausgestaltungsform zu gewährleisten, ist ein Spalt zwischen der zumindest einen Betätigungsrolle und den Seiten der nutartigen Ausnehmung ausgebildet. Mit anderen Worten liegt die zumindest eine Betätigungsrolle nicht formschlüssig an die beiden Seiten der Ausnehmung an.

In diesem Zusammenhang wird gemäß dieser Ausgestaltungsform die zuvor beschriebene Definition von freiliegend dahingehend erweitert, dass unter der "freiliegenden Anordnung" auch die vorstehend beschriebene Anordnung der zumindest einen Betätigungsrolle zählt, da diese immer noch von drei Seiten aus zugänglich ist.

Durch die insbesondere nutartige Ausnehmung ist eine platzsparende Anordnung der zumindest einen Betätigungsrolle in Bezug auf eine Gesamthöhe des Greifarms ermöglicht, ohne die Funktion der zumindest einen Betätigungsrolle einzuschränken. Mit anderen Worten baut der erfindungsgemäße Greifarm somit sehr kompakt, was insbesondere für Anwendungen mit einem begrenzten Platzangebot vorteilhaft ist.

Vorzugsweise ist die zumindest eine Betätigungsrolle zwischen einer Lagerbohrung in dem Grundkörper, die zur Aufnahme eines Lagerbolzens dient, und dem Greifabschnitt angeordnet. Diese Anordnung hat sich im Hinblick auf eine Optimierung einer kompakten Bauweise des Greifarms als besonders vorteilhaft erwiesen.

Zweckdienlicherweise weist die zumindest eine Betätigungsrolle einen Kunststoff auf. Insbesondere ist die zumindest eine Betätigungsrolle vollständig aus einem Kunststoff gebildet. Dies hat den Vorteil, dass die zumindest eine Betätigungsrolle aus einem strapazierfähigen und insbesondere abriebfesten Material ausgestaltet ist. Dieser Ausgestaltung liegt der Gedanke zugrunde, dass die zumindest eine Betätigungsrolle im Betrieb je nach Anwendung mehrere hunderttausend Mal mit dem Steuernocken physisch in (Reib-)Kontakt kommt.

Weiterhin ist die zumindest eine Betätigungsrolle somit kostengünstig als Verschleiß- und speziell als Wegwerfteil herstellbar, was die Gesamtkosten des Greifarms reduziert. Auch haben sich Betätigungsrollen aus Kunststoff hinsichtlich einer Lärmentfaltung als vorteilhafter gegenüber Betätigungsrollen aus Metall erwiesen.

Alternativ weist die zumindest eine Betätigungsrolle ein Metall, z.B. Stahl oder Aluminium auf, oder ist aus einem derartigen Metall gebildet. Weiterhin alternativ kann die zumindest eine Betätigungsrolle ein Metall und eine Kunststoffummantelung aufweisen. Weiterhin alternativ kann die zumindest eine Betätigungsrolle einen Kunststoffkern und eine darum angeordnete Kunststoffummantelung aufweisen, wobei die beiden Kunststoffe (des Kerns und der Ummantelung) unterschiedliche Eigenschaften aufweisen.

Die stiftartige Aufnahme weist eine Bohrung auf. Die Bohrung dient einer Aufnahme zumindest eines Öffnungsmittels oder zumindest eines Schließmittels. In dieser Ausführungsform ist dann das zumindest eine Öffnungsmittel oder das zumindest eine Schließmittel örtlich betrachtet über der zumindest einen Betätigungsrolle angeordnet, was eine Länge des Greifarms im Vergleich einer Anordnung des zumindest einen Schließ- oder Öffnungsmittels neben der zumindest einen Betätigungsrolle vorteilhaft reduziert.

Gemäß einer zweckdienlichen Ausgestaltung ist ein Gleitlager an dem Grundkörper oder an der zumindest einen Betätigungsrolle vorgesehen, um die rotierbare Lagerung der zumindest einen Betätigungsrolle an dem Grundkörper zu optimieren.

Mit Blick auf die Greifvorrichtung wird die Aufgabe konkret gelöst durch eine Greifvorrichtung zum Greifen, Halten und Führen von flaschenartigen Behältern, die zumindest ein Greifarmpaar aus einem ersten Greifarm sowie einem komplementär zum ersten Greifarm ausgebildeten zweiten Greifarm aufweist. Bei den beiden Greifarmen handelt es sich insbesondere um den bereits vorstehend erwähnten Greifarm.

Der allgemeine Aufbau einer derartigen Greifvorrichtung sowie ein allgemeiner Aufbau des zuvor stehenden Greifarms ist beispielsweise in der EP 2 769 942 B1 beschrieben, die auf die Anmelderin zurückgeht.

So weist die Greifvorrichtung zumindest eine Lagereinheit zum Lagern des Greifarmpaares auf. Die Lagereinheit weist hierbei je einen Lagerbolzen auf, der zur Aufnahme des Grundkörpers dient. Hierzu weist der Grundkörper eine Bohrung auf, in der der Lagerbolzen im montierten Zustand einsitzt.

Weiterhin weist die Greifvorrichtung zumindest ein Schließmittel zum Schließen des Greifarmpaares von einer Öffnungsstellung in eine Greifstellung sowie zumindest ein Öffnungsmittel zum Öffnen des Greifarmpaares von der Greifstellung in die Öffnungsstellung auf.

Mit Blick auf die Transportvorrichtung wird die Aufgabe konkret gelöst durch eine Transportvorrichtung zum Greifen, Halten und Führen von flaschenartigen Behältern, wobei in einer Umfangsrichtung der Transportvorrichtung wenigstens eine Greifvorrichtung angeordnet ist, derart, dass das zumindest eine Greifarmpaar der Greifvorrichtung radial nach außen gerichtet ist. Bei der zumindest einen Greifvorrichtung handelt es sich insbesondere um die vorstehend beschriebene Greifvorrichtung. Weiterhin sind bevorzugt mehrere Greifvorrichtungen dieser Art in Umfangsrichtung jeweils benachbart zueinander an der Transportvorrichtung angeordnet. Aufgrund einer sich daraus ergebenden Geometrie der Transportvorrichtung wird diese auch als Transportstern bezeichnet.

Ausführungsbeispiele der Erfindung werden nachfolgend Anhand der Figuren näher erläutert. Diese zeigen in teilweise stark vereinfachten Darstellungen:
- Fig. 1: eine perspektivische Ansicht auf einen erfindungsgemäßen Greifarm für eine Greifvorrichtung,
- Fig. 2: eine Explosionsdarstellung einer Greifvorrichtung,
- Fig. 3: eine perspektivische Ansicht der Greifvorrichtung im montierten Zustand,
- Fig. 4: eine perspektivische Ansicht auf eine erfindungsgemäße Transportvorrichtung gemäß einer ersten Ausgestaltungsform sowie
- Fig. 5: eine perspektivische Ansicht auf eine erfindungsgemäße Transportvorrichtung gemäß einer zweiten Ausführungsform.

In den Figuren sind gleichwirkende Teile stets mit den gleichen Bezugszeichen dargestellt.

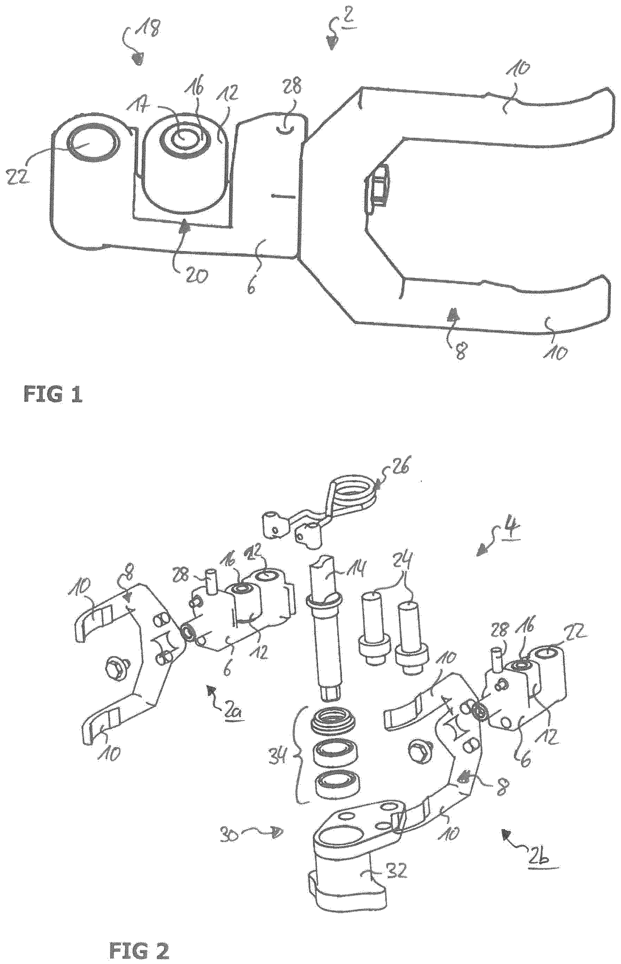

Der in Fig. 1 dargestellte Greifarm 2 für eine Greifvorrichtung 4 (vgl. Fig. 2) zum Greifen, Halten und Führen von flaschenartigen Behältern (nicht dargestellt) weist einen Grundkörper 6 und einen an dem Grundkörper 6 angeordneten Greifabschnitt 8 auf. Der Greifabschnitt 8 ist im Ausführungsbeispiel gemäß Fig. 1 einstückig, also monolithisch und aus einem Kunststoff ausgebildet. Der Greifabschnitt 8 ist weiterhin gabelartig mit zwei Greiffingern 10 ausgebildet, um die flaschenartigen Behälter zu greifen.

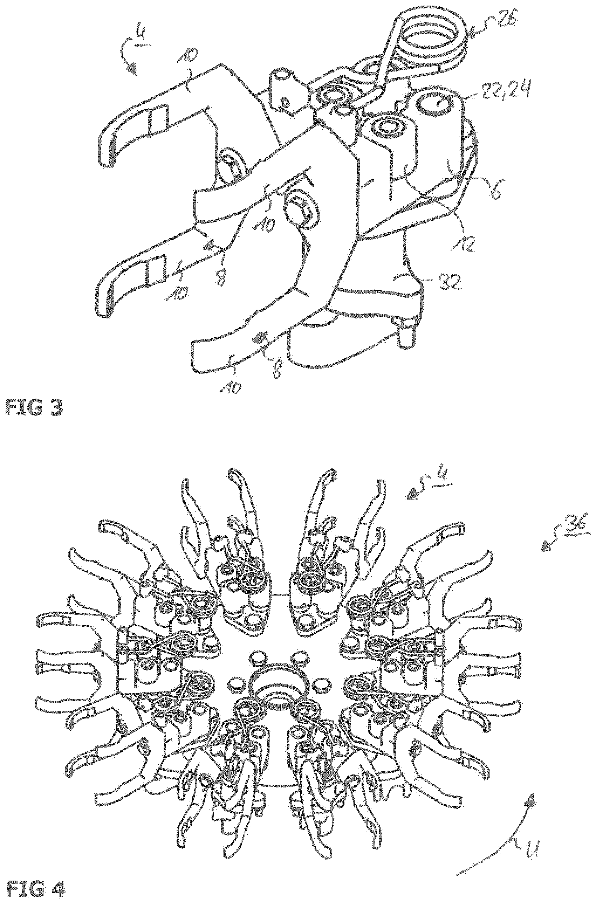

Ferner weist der Greifarm 2 eine am Grundkörper 6 angeordnete Betätigungsrolle 12 auf, die zudem rotierbar gelagert ist. Alternativ können auch mehrere Betätigungsrollen 12 an dem Grundkörper 6 angeordnet sein. Die Betätigungsrolle 12 dient einem Zusammenwirken mit einem Steuernocken 14 (vgl. Fig. 2) der Greifvorrichtung 4. Die Betätigungsrolle 12 ist an dem Grundkörper 6 austauschbar und insbesondere werkzeuglos austauschbar angeordnet, um einen schnellen und einfachen Austausch der Betätigungsrolle 12 zu gewährleisten. Zudem weist die Betätigungsrolle 12 einen Kunststoff auf und ist insbesondere vollständig aus einem Kunststoff gebildet. Dies erhöht die mechanische Widerstandsfähigkeit der Betätigungsrolle 12, die im montierten Zustand und im Betrieb der Greifvorrichtung 4 in mechanischem (Reib-)Kontakt mit dem Steuernocken 14 steht (vgl. Fig. 2 und Fig. 3). Alternativ weist die Betätigungsrolle 12 ein Metall auf, welches hierzu optional mit einer Kunststoffummantelung versehen ist.

Um die Betätigungsrolle 12 an dem Grundkörper 6 insbesondere rotierbar anzuordnen weist der Grundkörper 6 eine stiftartige Aufnahme 16 auf, auf die die Betätigungsrolle 12 austauschbar aufgesteckt ist. Alternativ oder ergänzend ist ein nicht dargestelltes Gleitlager vorgesehen, das entweder an der stiftartigen Aufnahme 16 oder an der Betätigungsrolle 12 angeordnet ist und die Rotierbarkeit der Betätigungsrolle 12 optimiert. Zur optionalen Anordnung eines Öffnungsmittels oder eines Schließmittels 26 weist die stiftartige Aufnahme 16 eine Bohrung 17 auf, die zur Aufnahme eines Öffnungsmittels oder eines Schließmittels 26 ausgebildet ist.

Weiterhin ist die Betätigungsrolle 12 an einer Oberseite 18 des Grundkörpers 6 insbesondere freiliegend angeordnet, um eine einfache Zugänglichkeit für einen Austausch zu ermöglichen. Unter der freiliegenden Anordnung ist hierbei zu verstehen, dass die Betätigungsrolle 12 insbesondere im montierten Zustand des Greifarms 2 nicht von anderen Bauteilen des Greifarms 2 ver- oder abgedeckt ist.

Im Ausführungsbeispiel gemäß Fig. 1 weist der Grundkörper 6 eine nutförmige Ausnehmung 20 auf, in der die Betätigungsrolle 12 einsitzt. Hierzu ist die stiftförmige Aufnahme 16 ebenfalls in der Ausnehmung 22 angeordnet. Die Betätigungsrolle 12 ist somit im montierten Zustand im Wesentlichen bündig mit der Oberseite 18 des Grundkörpers angeordnet und stellt somit sicher, dass der Greifarm 2 in seiner Gesamtheit kompakt baut.

Bei dem in Fig. 1 gezeigten Greifarm 2 ist die Betätigungsrolle 12 zwischen einer Lagerbohrung 22 und dem Greifabschnitt 8 angeordnet. Die Lagerbohrung 22 dient einer Aufnahme eines in Fig. 2 erklärten Lagerbolzens 24.

Um ein Öffnungsmittel oder ein Schließmittel 26 an dem Greifarm 2 anzuordnen, weist der Grundkörper 6 eine in Fig. 1 lediglich angedeutetes Befestigungsmittel 28 in Form einer Bohrung auf.

Die in Fig. 2 und Fig. 3 dargestellte Greifvorrichtung 4 weist ein Greifarmpaar aus einem ersten Greifarm 2a und einem zweiten Greifarm 2b auf. Weiterhin weist die Greifvorrichtung 4 eine Lagereinheit 30 mit den bereits erwähnten Lagerbolzen 24 und einem Lagerkörper 32 auf. Im montierten Zustand, der in Fig. 3 gezeigt ist, sind die beiden Greifarme 2a, 2b auf dem Lagerkörper 32 angeordnet. Die Lagerbolzen 24 der Lagereinheit 30 sitzen in je einer Lagerbohrung 22 ein und ermöglichen durch die rotierbare Lagerung ein Verstellen des Greifarmpaares von einer Öffnungsstellung in eine Greifstellung und umgekehrte. In Fig. 3 ist die Greifvorrichtung 4 in der Greifstellung gezeigt.

Der Steuernocken 14 wirkt mit den beiden Betätigungsrollen 12 des Greifarmpaares derart zusammen, dass er im Ausführungsbeispiel als Öffnungsmittel dient. Hierbei drückt der Steuernocken 14 durch eine Drehung um seine Längsachse die beiden Betätigungsrollen 12 auseinander und verstellt somit die Greifvorrichtung 4 von der Greifstellung in die Öffnungsstellung.

Um anschließend die Greifvorrichtung 4 von der Öffnungsstellung in die Greifstellung zurück zu stellen, ist ein als Schenkelfeder ausgebildetes Schließmittel 26 vorgesehen. Deren Schenkel sind jeweils auf einem als Stift ausgebildeten Befestigungsmittel 28 der Grundkörper 6 angeordnet.

Ferner sind in der Ausführungsform gemäß Fig. 2 und 3 noch Lagerteile 34 vorgesehen, die zur rotierbaren Lagerung des Steuernockens 14 dienen.

Fig. 4 zeigt eine Transportvorrichtung 36 mit mehreren an der Transportvorrichtung 36 angeordneten Greifvorrichtungen 4 gemäß einer ersten Ausgestaltungsform. Die Greifvorrichtungen 4 sind hierbei in einer Umfangsrichtung U an der Transportvorrichtung 36 angeordnet und speziell mit dem Lagerkörper 32 auf die Transportvorrichtung 36 aufgeschraubt. Die Greifarmpaare der Greifvorrichtungen 4 sind dabei radial nach außen gerichtet. Gemäß der in Fig. 4 gezeigten ersten Ausführungsform weisen die Greifvorrichtungen 4 jeweils ein als Feder und speziell als Schenkelfeder ausgebildetes Schließmittel 26 auf.

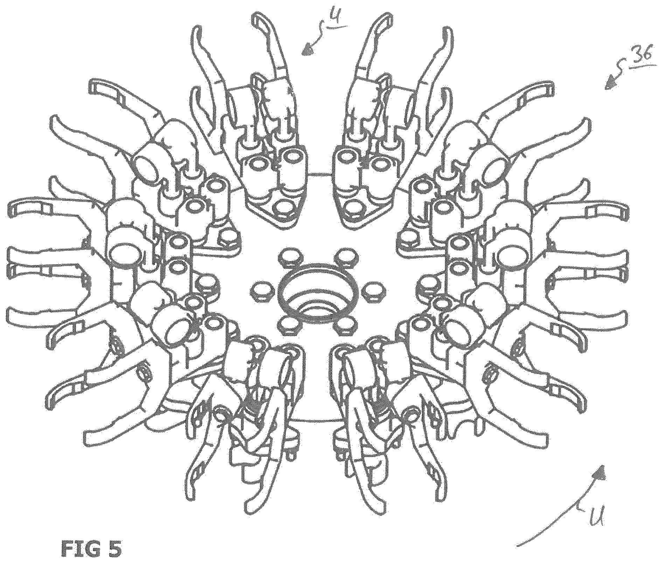

In Fig. 5 ist eine Transportvorrichtung 36 gemäß einer zweiten Ausführungsform dargestellt. Die Transportvorrichtung 36 der zweiten Ausführungsform entspricht im Wesentlichen der Transportvorrichtung 36 gemäß der ersten Ausführungsform (vgl. Fig. 4). Unterschiedlich ist, dass gemäß der zweiten Ausführungsform der Transportvorrichtung 36 das Schließmittel 26 der Greifvorrichtungen 4 als ein Magnetpaar ausgebildet ist.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

### Bezugszeichenliste

- 2: Greifarm
- 4: Greifvorrichtung
- 6: Grundkörper
- 8: Greifabschnitt
- 10: Greiffinger
- 12: Betätigungsrolle
- 14: Steuernocken
- 16: stiftartige Aufnahme
- 17: Bohrung innerhalb der stiftartigen Aufnahme
- 18: Oberseite
- 20: Ausnehmung
- 22: Lagerbohrung
- 24: Lagerbolzen
- 26: Schließmittel
- 28: Befestigungsmittel
- 30: Lagereinheit
- 32: Lagerkörper
- 34: Lagerteile
- 36: Transportvorrichtung

- U: Umfangsrichtung

## Patentansprüche

1. Greifarm (2) für eine Greifvorrichtung (4) zum Greifen, Führen und Halten von flaschenartigen Behältern, aufweisend:
- einen Grundkörper (6),
- einen Greifabschnitt (8), der an dem Grundkörper (6) angeordnet ist, sowie
- zumindest eine an dem Grundkörper (6) angeordnete und rotierbar gelagerte Betätigungsrolle (12), zum Zusammenwirken mit einem Steuernocken (14) der Greifvorrichtung (4), wobei
die zumindest eine Betätigungsrolle (12) austauschbar an dem Grundkörper (6) angeordnet ist,
**dadurch gekennzeichnet, dass**
der Grundkörper (6) eine stiftartige Aufnahme (16) für die zumindest eine austauschbare Betätigungsrolle (12) aufweist, wobei die stiftartige Aufnahme (16) eine Bohrung (17) aufweist, zur Aufnahme eines Öffnungsmittels oder eines Schließmittels (26).

2. Greifarm (2) nach Anspruch 1,
**dadurch gekennzeichnet, dass**
die zumindest eine Betätigungsrolle (12) auf die stiftartige Aufnahme (16) austauschbar aufgesteckt ist.

3. Greifarm (2) nach einem der vorhergehenden Ansprüche,
**dadurch gekennzeichnet, dass**
die zumindest eine Betätigungsrolle (12) an einer Oberseite (18) des Grundkörpers (6) angeordnet ist.

4. Greifarm (2) nach einem der vorhergehenden Ansprüche,
**dadurch gekennzeichnet, dass**
die zumindest eine Betätigungsrolle (12) freiliegend an dem Grundkörper (6) angeordnet ist.

5. Greifarm (2) nach einem der vorhergehenden Ansprüche,
**dadurch gekennzeichnet, dass**
der Grundkörper (6) eine nutartige Ausnehmung (20) aufweist, in der die zumindest eine Betätigungsrolle (12) austauschbar angeordnet ist.

6. Greifarm (2) nach einem der vorhergehenden Ansprüche,
**dadurch gekennzeichnet, dass**
die zumindest eine Betätigungsrolle (12) zwischen einer Lagerbohrung (22) des Grundkörpers (6) zur Aufnahme eines Lagerbolzens (24) und dem Greifabschnitt (8) angeordnet ist.

7. Greifarm (2) nach einem der vorhergehenden Ansprüche,
**dadurch gekennzeichnet, dass**
die zumindest eine Betätigungsrolle (12) einen Kunststoff aufweist.

8. Greifarm (2) nach einem der vorhergehenden Ansprüche,
**dadurch gekennzeichnet, dass**
ein Gleitlager an dem Grundkörper (6) oder an der zumindest einen Betätigungsrolle (12) vorgesehen ist, zur rotierbaren Lagerung der zumindest einen Betätigungsrolle (12).

9. Greifvorrichtung (4) zum Greifen, Halten und Führen von flaschenartigen Behältern, aufweisend:
- zumindest ein Greifarmpaar aus einem ersten Greifarm (2a) sowie einem komplementär zum ersten Greifarm (2a) ausgebildeten zweiten Greifarm (2b) nach einem der Ansprüche 1 bis 8,
- zumindest eine Lagereinheit (30) zum Lagern des Greifarmpaares,
- zumindest ein Schließmittel (26) zum Schließen des Greifarmpaares von einer Öffnungsstellung in eine Greifstellung sowie
- zumindest ein Öffnungsmittel zum Öffnen des Greifarmpaares von der Greifstellung in die Öffnungsstellung.

10. Transportvorrichtung (36) zum Greifen, Halten und Führen von flaschenartigen Behältern, wobei in einer Umfangsrichtung (U) der Transportvorrichtung (36) wenigstens eine Greifvorrichtung (4) nach Anspruch 9 angeordnet ist, derart, dass das zumindest eine Greifarmpaar der Greifvorrichtung (4) radial nach außen gerichtet ist.

## Claims

1. A gripper arm (2) for a gripping device (4) for the gripping, guiding and holding of bottle-like containers, comprising:
- a base body (6),
- a gripping section (8) arranged on the base body (6), as well as
- at least one actuating roller (12) arranged and rotatably mounted on the base body (6) for interacting with a control cam (14) of the gripping device (4), wherein
the at least one actuating roller (12) is arranged on the base body (6) so as to be replaceable,
**characterized in that**
the base body (6) comprises a pin-like seating (16) for the at least one actuating roller (12), wherein the pin-like seating (16) has a bored hole (17) for accommodating an opening means or a closing means (26).

2. The gripper arm (2) according to claim 1,
**characterized in that**
the at least one actuating roller (12) is replaceably mounted on the pin-like seating (16).

3. The gripper arm (2) according to one of the preceding claims,
**characterized in that**
the at least one actuating roller (12) is arranged on an upper side (18) of the base body (6).

4. The gripper arm (2) according to one of the preceding claims,
**characterized in that**
the at least one actuating roller (12) is arranged on the base body (6) in exposed manner.

5. The gripper arm (2) according to one of the preceding claims,
**characterized in that**
the base body (6) comprises a groove-like recess (20) in which the at least one actuating roller (12) is arranged so as to be replaceable.

6. The gripper arm (2) according to one of the preceding claims,
**characterized in that**
the at least one actuating roller (12) is arranged between a bearing bore (22) of the base body (6) for accommodating a bearing pin (24) and the gripping section (8).

7. The gripper arm (2) according to one of the preceding claims,
**characterized in that**
the at least one actuating roller (12) is of plastic.

8. The gripper arm (2) according to one of the preceding claims,
**characterized in that**
a sliding bearing is provided on the base body (6) or on the at least one actuating roller (12) for the rotatable bearing of the at least one actuating roller (12).

9. A gripping device (4) for the gripping, holding and guiding of bottle-like containers, comprising:
- at least one gripper arm pair of a first gripper arm (2a) and a second gripper arm (2a) of complementary form to the first gripper arm (2a) according to one of claims 1 to 8,
- at least one bearing unit (30) for supporting the gripper arm pair,
- at least one closing means (26) for closing the gripper arm pair from an open position into a gripping position, as well as
- at least one opening means for opening the gripper arm pair from the gripping position into the open position.

10. A transport device (36) for the gripping, holding and guiding of bottle-like containers, wherein at least one gripping device (4) according to claim 9 is arranged in a circumferential direction (U) of the transport device (36) such that the at least one gripper arm pair of the gripping device (4) is directed radially outwardly.

## Revendications

1. Bras de préhension (2) pour un dispositif de préhension (4) destiné à saisir, guider et maintenir des récipients de type bouteille, comprenant :
- un corps de base (6),
- une partie de préhension (8) disposée sur le corps de base (6), ainsi que
- au moins un galet d'actionnement (12) disposé sur le corps de base (6) et monté de manière rotative, destiné à coopérer avec une came de commande (14) du dispositif de préhension (4),
ledit au moins un galet d'actionnement (12) étant disposé de manière interchangeable sur le corps de base (6),
**caractérisé en ce que**
le corps de base (6) présente un logement (16) en forme de tige pour ledit au moins un galet d'actionnement (12) interchangeable, le logement (16) en forme de tige présentant un alésage (17) destiné à recevoir un moyen d'ouverture ou un moyen de fermeture (26).

2. Bras de préhension (2) selon la revendication 1,
**caractérisé en ce que**
ledit au moins un galet d'actionnement (12) est enfiché de manière interchangeable sur le logement (16) en forme de tige.

3. Bras de préhension (2) selon l'une des revendications précédentes,
**caractérisé en ce que**
ledit au moins un galet d'actionnement (12) est disposé sur une face supérieure (18) du corps de base (6).

4. Bras de préhension (2) selon l'une des revendications précédentes,
**caractérisé en ce que**
ledit au moins un galet d'actionnement (12) est disposé de façon dégagée sur le corps de base (6).

5. Bras de préhension (2) selon l'une des revendications précédentes,
**caractérisé en ce que**
le corps de base (6) présente un évidement (20) en forme de rainure dans lequel ledit au moins un galet d'actionnement (12) est disposé de manière interchangeable.

6. Bras de préhension (2) selon l'une des revendications précédentes,
**caractérisé en ce que**
ledit au moins un galet d'actionnement (12) est disposé entre un alésage de montage (22) du corps de base (6), destiné à recevoir un boulon de montage (24), et la partie de préhension (8).

7. Bras de préhension (2) selon l'une des revendications précédentes,
**caractérisé en ce que**
ledit au moins un galet d'actionnement (12) comprend une matière plastique.

8. Bras de préhension (2) selon l'une des revendications précédentes,
**caractérisé en ce que**
un palier lisse est prévu sur le corps de base (6) ou sur ledit au moins un galet d'actionnement (12) pour le montage rotatif dudit au moins un galet d'actionnement (12).

9. Dispositif de préhension (4) pour saisir, maintenir et guider des récipients de type bouteille, comprenant :
- au moins une paire de bras de préhension constitué d'un premier bras de préhension (2a) ainsi que d'un deuxième bras de préhension (2b) complémentaire au premier bras de préhension (2a), selon l'une des revendications 1 à 8,
- au moins une unité de montage (30) pour monter la paire de bras de préhension,
- au moins un moyen de fermeture (26) pour fermer la paire de bras de préhension d'une position d'ouverture à une position de préhension, ainsi que
- au moins un moyen d'ouverture pour ouvrir la paire de bras de préhension de la position de préhension à la position d'ouverture.

10. Dispositif de transport (36) pour saisir, maintenir et guider des récipients de type bouteille, dans lequel au moins un dispositif de préhension (4) selon la revendication 9 est disposé dans une direction périphérique (U) du dispositif de transport (36), de telle sorte que ladite au moins une paire de bras de préhension du dispositif de préhension (4) est orientée radialement vers l'extérieur.
